(19) Europäisches Patentamt
European Patent Office
Office européen des brevets

(11) **EP 3 022 152 B1**

(12) **EUROPÄISCHE PATENTSCHRIFT**

(45) Veröffentlichungstag und Bekanntmachung des Hinweises auf die Patenterteilung:
**30.09.2020   Patentblatt 2020/40**

(21) Anmeldenummer: **14755000.8**

(22) Anmeldetag: **15.07.2014**

(51) Int Cl.:
*C01B 13/02* (2006.01)          *B01D 53/22* (2006.01)
*B01D 63/06* (2006.01)          *B01D 71/02* (2006.01)

(86) Internationale Anmeldenummer:
**PCT/DE2014/100255**

(87) Internationale Veröffentlichungsnummer:
**WO 2015/007272 (22.01.2015 Gazette 2015/03)**

(54) **MEMBRANTRENNVERFAHREN UND MEMBRANANLAGE ZUR ENERGIEEFFIZIENTEN ERZEUGUNG VON SAUERSTOFF**

MEMBRANE SEPARATION PROCESS AND MEMBRANE PLANT FOR ENERGY-EFFICIENT PRODUCTION OF OXYGEN

PROCÉDÉ DE SÉPARATION MEMBRANAIRE ET INSTALLATION À MEMBRANES PERMETTANT LA PRODUCTION D'OXYGÈNE AVEC UNE BONNE EFFICACITÉ ÉNERGÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2013   DE 102013107610**

(43) Veröffentlichungstag der Anmeldung:
**25.05.2016   Patentblatt 2016/21**

(73) Patentinhaber: **Fraunhofer Gesellschaft zur Förderung der angewandten Forschung E.V.
80686 München (DE)**

(72) Erfinder: **KRIEGEL, Ralf
07768 Kahla (DE)**

(74) Vertreter: **Oehmke, Volker et al
Patentanwälte Oehmke & Kollegen
Neugasse 13
07743 Jena (DE)**

(56) Entgegenhaltungen:
**EP-A1- 0 108 843          EP-A2- 0 024 718
EP-A2- 2 067 937          WO-A2-2009/065374
US-A- 5 753 007          US-A1- 2004 002 030**

EP 3 022 152 B1

**Beschreibung**

Die Erfindung betrifft ein Membrantrennverfahren und eine Membrananlage zur energieeffizienten Sauerstofferzeugung unter Verwendung gemischt leitender keramischer Membranen.

Die konventionelle Produktion von Sauerstoff erfolgt gegenwärtig bevorzugt durch Druckwechseladsorption (PSA - Pressure Swing Adsorption) oder durch kryogene Luftzerlegung (Linde®-Verfahren). Energetisch hoch optimierte Großanlagen erreichen spezifische Energieverbräuche von minimal 0,34 $kWh_{el}$./$Nm^3$ $O_2$ (kryogen - Fu, C., Gundersen, T.: Using exergy analysis to reduce power consumption in air separation units for oxy-combustion processes. Energy 44 (2012) 1, 60-68) bzw. 0,36 $kWh_{el}$./$Nm^3$ $O_2$ (PSA - Dietrich, W., Scholz, G., Voit, J.: Linde-Verfahren zur Gewinnung von Sauerstoff und Ozon für eine Zellstoff- und Papierfabrik; Berichte aus Technik und Wissenschaft 80 (2000), 3-8). Dieser spezifische Energieverbrauch der konventionellen Anlagen steigt jedoch mit der angestrebten Reinheit des Produktgases Sauerstoff stark an, ebenso mit sinkender Anlagengröße. So benötigen kleinere PSA-Anlagen mit einem Ausstoß von bis zu ca. 1000 $Nm^3$ $O_2$/h mindestens 1,0 $kWh_{el}$./$Nrm^3$ $O_2$, liefern dabei aber nur 95 Vol-% Sauerstoff. Aufgrund des hohen spezifischen Energieverbrauchs ist eine dezentrale Sauerstofferzeugung für viele Anwendungen in der Verbrennungs- und Vergasungstechnik wirtschaftlich nicht sinnvoll. Noch unwirtschaftlicher ist eine Versorgung über Flaschen oder Flüssigtanks, insbesondere bei einem kontinuierlichen Sauerstoffbedarf.

Eine alternative Methode zur Herstellung von Sauerstoff basiert auf einem Membrantrennprozess bei hohen Temperaturen. Dafür werden gemischt leitende keramische Membranen (MIEC - Mixed Ionic Electronic Conductor) eingesetzt, die eine hochselektive Abtrennung von Sauerstoff ermöglichen. Der Sauerstofftransport beruht auf dem Transport von Oxidionen durch das gasdichte keramische Material und dem parallel stattfindenden Transport elektronischer Ladungsträger (Elektronen oder Defektelektronen). Seit den 1980er Jahren wurde eine Vielzahl keramischer Materialien hinsichtlich des Sauerstofftransports und weiterer Materialeigenschaften untersucht (Sunarso, J., Baumann, S., Serra, J. M., Meulenberg, W. A., Liu, S., Lin, Y. S., Diniz da Costa, J. C.: Mixed ionic-electronic conducting (MIEC) ceramicbased membranes for oxygen separation; Journal of Membrane Science 320 (2008), 13-41).

Die Sauerstoffpermeation durch eine MIEC-Membran kann durch die Wagner'sche Gleichung beschrieben werden und ist vor allem durch die ambipolare Leitfähigkeit des Materials bei Einsatztemperatur, durch die Membrandicke und durch die Triebkraft bestimmt. Letztere ergibt sich aus dem logarithmischen Verhältnis des $O_2$-Partialdrucks im Feedgas $p_O(h)$ zu dem Sauerstoffpartialdruck im Spülgas $p_O(l)$ oder im Permeat. Der Sauerstofffluss durch eine MIEC-Membran ist demnach bei gegebenem Material, konstanter Membrandicke und festgelegter Temperatur proportional zu $\ln\{p_O(h)/p_O(l)\}$. Dementsprechend hat eine Verdopplung von $p_O(h)$ auf der Feedgasseite die gleiche Erhöhung des Sauerstoffflusses zur Folge wie eine Halbierung von $p_O(l)$ auf der Permeat- oder Sweepgasseite. Zur Erzeugung reinen Sauerstoffs in technischen Membrananlagen kann dementsprechend die Luft verdichtet oder der Sauerstoff mit Vakuum abgesaugt werden, natürlich sind auch kombinierte Prozesse möglich (Armstrong, P. A., Bennett, D. L., Foster, E. P., Stein, V. E.: ITM Oxygen: The New Oxygen Supply for the New IGCC Market; Gasification Technologies 2005, San Francisco, 9.-12.10.2005). Für großtechnische Anlagen wird i. A. die Verdichtung der Luft bevorzugt, da Kompressoren i. A. billiger und besser verfügbar sind als Vakuumerzeuger.

Der Nachweis der technologischen Machbarkeit der Sauerstofferzeugung mit MIEC-Membranen wurde bereits im Kleinmaßstab durch den Aufbau und Betrieb eines elektrisch beheizten, portablen Sauerstoffgenerators mit elektrisch betriebener Vakuumpumpe erbracht (Kriegel, R.: Einsatz keramischer BSCF-Membranen in einem transportablen Sauerstoff-Erzeuger. in: J. Kriegesmann (Ed.), DKG Handbuch Technische Keramische Werkstoffe, Loseblattwerk, HvB-Verlag Ellerau, 119. Erg.-Lieferung, November 2010, Kapitel 8.10.1.1, S. 1-46). Der spezifische Energieverbrauch des beschriebenen Gerätes lag mit 1,6 $kWh/Nm^3$ $O_2$ allerdings deutlich über dem konventioneller Prozesse, wobei darüber hinaus der Bedarf an thermischer Energie vernachlässigt wurde.

Der Eigenenergiebedarf der MIEC-Membrantrennung resultiert einerseits aus der Wärmeenergie, die zur Aufrechterhaltung der hohen Temperatur von 800 - 900 °C an der Membran erforderlich ist. Andererseits wird zur Erzeugung der Triebkraft für den Sauerstofftransport Kompressionsenergie zur Gasverdichtung benötigt. Wird die Luft auf der Feedseite komprimiert, so ist zur Rückgewinnung der aufgewendeten Kompressionsenergie eine Entspannung der komprimierten, $O_2$-abgereicherten Luft über eine Gasturbine erforderlich. Alternativ zu diesem Überdruckverfahren kann der Sauerstoff durch Absaugen mit Vakuum gewonnen werden. Für das Vakuumverfahren ist weniger Kompressionsenergie erforderlich, welche jedoch nicht zurückgewonnen werden kann. Entsprechende Prozesse wurden im Bereich der Kraftwerkstechnik bereits mehrfach beschrieben (WO 2008/014481 A1, EP 2 067 937 A2, WO 2009/065374 A3, EP 2 026 004 A1), wobei nur WO 2009/065374 A3 einen Vakuumprozess beansprucht.

Der Eigenenergiebedarf der MIEC-Membrananlagen wird im Kraftwerksbereich erheblich durch die Integration in das Kraftwerk beeinflusst. So schwankt je nach Integrationsgrad der MIEC-Membrananlage der berechnete Eigenenergiebedarf für den Überdruckprozess zwischen 0,031 und 0,134 $kWh_{el}$./$Nm^3$ $O_2$ (Stadler, H., Beggel, F., Habermehl, M., Persigehl, B., Kneer, R., Modigell, M., Jeschke, P.: Oxyfuel coal combustion by efficient integration of oxygen transport membranes; International Journal of Greenhouse Gas Control 5 (2011), 7-15). Der Vakuumprozess wird mit einem Energiebedarf von minimal 0,14 $kWh_{el}$./$Nm^3$ $O_2$ angegeben (Nazarko, J., Weber, M., Riensche, E., Stolten, D.: Oxygen Supply for Oxyfuel Power Plants by Oxy-Vac-Jül Process, 2nd International Conference on Energy Process Engineering, Efficient Carbon Capture for Coal Power Plants, 20.-22.06. 2011, Frankfurt/Main). Andere Autoren finden für den Membranprozess hingegen keinen merklichen Unterschied zur kryogenen Luftzerlegung (Pfaff, I., Kather, A.: Comparative Thermodynamic Analysis and Integration Issues of CCS Steam Power Plants Based on Oxy-Combustion with Cryogenic or Membrane Based Air Separation; Energy Procedia 1 (2009) 1, 495-502). Diese für stark differierende Randbedingungen erhaltenen, stark unterschiedlichen bzw. widersprüchlichen Resultate sind zur energetischen Bewertung einer eigenständigen Membrananlage ohne Ankopplung an ein Kraftwerk offensichtlich nicht geeignet.

In den erwähnten Arbeiten werden Modellierungsrechnungen mit komplexen Software-Tools durchgeführt, um Abhängigkeiten des Eigenenergiebedarfs des Membranverfahrens vom Luftdurchsatz, vom Abtrenngrad des Sauerstoffs aus der zugeführten Luft (Feedgas), von der verfahrenstechnischen Einbindung ins Kraftwerk zu identifizieren und zu diskutieren. Ein einfacher, nachvollziehbarer Zusammenhang zwischen den Einflussgrößen und dem spezifischen Energieverbrauch einer MIEC-Membrananlage wird jedoch nicht angegeben oder abgeleitet, da die Modellierung stets im Zusammenhang mit der Anbindung ans Kraftwerk durchgeführt wird. Dementsprechend ist es bisher mit vertretbarem Aufwand nicht möglich, für eine zu planende MIEC-Membrananlage den optimalen Betriebspunkt vorherzusagen und dementsprechend alle Komponenten auf diesen auszulegen.

Nach dem Stand der Technik wird für den wirtschaftlichen Betrieb einer MIEC-Membrananlage die flächennormierte Sauerstoffpermeation des Membranmaterials als entscheidend angesehen. Dementsprechend wird für den wirtschaftlichen Betrieb eine minimale Sauerstoffpermeation von 10 Nml/(cm$^2$ · min) postuliert (Vente, Jaap F., Haije, Wim. G., Ijpelaan, Ruud, Rusting, Frans T.: On the full-scale module design of an air separation unit using mixed ionic electronic conducting membranes; Journal of Membrane Science 278 (2006), 66-71). Aktuelle Arbeiten zur Entwicklung von MIEC-Membranen orientieren dementsprechend fast durchweg auf möglichst hohe Sauerstoffpermeation (Baumann, S., Serra, J.M., Lobera, M.P., Escolástico, S., Schulze-Küppers, F., Meulenberg, W.A.: Ultrahigh oxygen permeation flux through supported Ba0.5Sr0.5Co0.8Fe0.2O3-$\delta$ membranes; Journal of Membrane Science 377 (2011) 198-205). Dabei werden hohe Feed-Durchsätze und reiner Sauerstoff als Feed verwendet; der Einfluss der $O_2$-Abreicherung im Feed auf die $O_2$-Permeation und auf den Energiebedarf wird nicht betrachtet. Eine umfassende Bewertung des Energieverbrauchs eigenständiger, autarker MIEC-Membrananlagen erfolgte bislang nicht.

Der Erfindung liegt die Aufgabe zugrunde, eine Möglichkeit anzugeben, sodass unter Vermeidung der Nachteile des Standes der Technik die Energieeffizienz des MIEC-Membranverfahrens zur Sauerstoffproduktion, insbesondere mit autarken MIEC-Membrananlagen, wesentlich gesteigert wird.

Erfindungsgemäß wird die Aufgabe mit einer Membrananlage zur energieeffizienten Gewinnung von Sauerstoff aus Frischluft enthaltend ein Gehäuse mit einem Eingang und einem Ausgang, MIEC-Membranen und einer Vakuumpumpe dadurch gelöst, dass eine metallische Anschlussplatte im Gehäuse angeordnet ist, die eine vakuumdichte Hohlraumstruktur enthält, in die die einseitig geschlossenen MIEC-Membranen gasdicht eingesetzt angeordnet sind. Das Gehäuse ist durch mindestens eine Trennwand in Kammern aufgeteilt, wobei jede Kammer einen stationären Regenerator, eine Zusatzheizung und einen Teil der MIEC-Membranen aufweist und in jeder Trennwand eine Öffnung vorhanden ist, sodass ein Durchgang für die Frischluft von der dem Eingang nachgeordneten Kammer zur dem Ausgang vorgeordneten Kammer gewährleistet ist. Weiterhin ist dem Eingang ein Lüfter vorgeordnet und dem Ausgang ein Lüfter nachgeordnet, wobei die Lüfter entgegengesetzte Saugrichtungen aufweisen. Ferner ist ein regenerativer Wärmetauscher vorhanden, wobei Teilbereiche dem Eingang und andere Teilbereiche dem Ausgang zugeordnet sind und die Vakuumpumpe mit der Hohlraumstruktur zum Absaugen des gewonnenen Sauerstoffs in Verbindung steht.

Ein wesentlicher Vorteil der erfindungsgemäßen Anordnung besteht darin, dass das Gehäuse der Membrananlage nicht druckdicht ausgeführt sein muss. Die Lüfter mit ihren entgegengesetzten Saugrichtungen können vorteilhaft ihre Laufrichtungen wechseln oder es sind entsprechende Luftklappen vorgesehen, sodass die Strömungsrichtung des Luftstromes umkehrbar ist. Eine weitere vorteilhafte Ausgestaltung besteht darin, dass Eingang und Ausgang mit ihren zugeordneten Lüftern auf einem Drehschieber angeordnet sind. Durch die permanente Drehung wird ein gleicher Effekt wie durch die Umkehr der Strömungsrichtung bei feststehendem Eingang und Ausgang erreicht. Von Vorteil ist es ebenfalls, wenn das Gehäuse in mehrere identisch aufgebaute Kammern unterteilt ist, wobei Eingang und Ausgang sich jeweils über ein Drittel der Kammern erstrecken und sich damit ein Drittel der Kammern in einer Ruhephase befinden.

Erfindungsgemäß wird die Aufgabe auch mit einem Membrantrennverfahren zur energieeffizienten Gewinnung von Sauerstoff aus erwärmter Frischluft unter Verwendung gemischt leitender Membranen im Vakuumbetrieb, wobei die Frischluft nach Trennung des Sauerstoffs als Abluft abgeführt wird, dadurch gelöst, dass mindestens 85 % der zur Erwärmung der Frischluft erforderlichen Wärmeenergie durch Nutzung der Abwärme der Abluft und / oder des gewonnenen Sauerstoffs erfolgt, dass die restliche Erwärmung der Frischluft durch externe Energiezufuhr realisiert wird und dass das Verhältnis von Frischluft zu erzeugtem Sauerstoff im Normalbetrieb innerhalb der Grenzen 6 : 1 und 25 : 1 eingestellt wird. Die restliche Erwärmung kann dabei durch elektrische Beheizung oder Verbrennungsprozesse erfolgen. Die erforderliche Wärmeenergie zur Erwärmung der Frischluft wird vorteilhaft durch Verwendung regenerativer Wärmetauscher gewonnen. Das erfindungsgemäße Membrantrennverfahren ist besonders effizient, wenn der Sauerstoff auf der Permeatseite durch Vakuum abgesaugt wird, aber das Feedgas bei Umgebungsdruck eingesetzt wird. Die Vakuumerzeugung erfolgt durch elektromechanische Vakuumpumpen, mechanische Vakuumpumpen oder Dampfstrahlpumpen. Der Luftdurchsatz wird so geregelt, dass der Sauerstoff-Partialdruck in der Abluft nicht mehr als 100 mbar, bevorzugt jedoch weniger als 20 mbar über dem Vakuumdruck auf der Permeatseite liegt.

Erfindungsgemäß werden die optimalen Betriebsbedingungen einer MIEC-Membrananlage aus den bekannten Gleichungen zum Sauerstofftransport, dem Wärmerückgewinnungsgrad der einzusetzenden regenerativen Wärmetauscher und dem realen Bedarf an Kompressionsenergie abgeleitet. Die Höhe der Sauerstoffpermeation sowie das verwendete MIEC-Membranmaterial können vernachlässigt werden, da sie sich im Gegensatz zum bekannten Stand der Technik nur unwesentlich auf den Eigenenergiebedarf auswirken und die abgeleiteten Gleichungen durch Normierung auf die erzeugte Sauerstoffmenge unabhängig von der Sauerstoffpermeation sind. Daraus resultiert im Gegensatz zum beschriebenen Stand der Technik, dass sich die Sauerstoffpermeation lediglich auf die Anlagengröße und damit vor allem auf die Investitionskosten auswirkt. Aus der veränderten Anlagengröße resultiert hinsichtlich des Energieverbrauchs also nur der sekundäre Effekt höherer Wärmeverluste, die typischerweise unter 5 % des Gesamtenergiebedarfs größerer Anlagen liegen. Die absolute Höhe der Sauerstoffpermeation kann deshalb erfindungsgemäß für die energetische Bewertung vernachlässigt werden.

Eine Sauerstoffpermeation von der Feedseite zur Permeat- bzw. Vakuumseite findet bei MIEC-Membranen statt, solange der Sauerstoffpartialdruck auf der Feedgasseite größer als auf der Sweepgas- oder Permeatseite ist. Ist die Sauerstoffpermeation durch die Membran gegenüber dem Feedgasdurchsatz hoch, so wird diesem relativ viel Sauerstoff entzogen. Dadurch sinkt der Sauerstoffpartialdruck auf der Feedseite entlang der Membran ab, ebenso die lokale Sauerstoffpermeation. Diese Abreicherung des Sauerstoffs kann durch den sogenannten Sauerstoffabtrenngrad (engl. $O_2$ recovery) $f_{ORec}$ beschrieben werden.

Eine weitgehende Ausnutzung der installierten Membranflächen ist dann gegeben, wenn nach dem Membrankontakt der Sauerstoffpartialdruck im Feedgas $p_{OFpout}$ nahezu dem Sauerstoffpartialdruck im Sweepgas oder Permeat $p_{OSout}$ entspricht, also $p_{OFout} \approx p_{OSout}$ gilt. Dieser anzustrebende Grenzwert beider Drücke entspricht dem Erreichen eines Gleichgewichts-Sauerstoff-Partialdrucks $p_{OEq}$ und kann aus dem Sauerstoffabtrenngrad $f_{ORec}$ wie folgt berechnet werden.

$$p_{OEq} = p_{OFout} = \frac{p_{OFin}(1 - f_{ORec})}{1 - f_{ORec}\, p_{OFin}} \approx p_{OSout} \tag{1}$$

Gleichzeitig steht der Sauerstoffabtrenngrad direkt mit dem flächenbezogenen Feedgasdurchsatz am Feedgaseintritt $j_{Fin}$, dem Sauerstoffpartialdruck am Feedgaseintritt $p_{OFin}$ und der Sauerstoffpermeation $j_{O2}$ in direktem Zusammenhang.

$$f_{ORec} = \frac{j_{O2}}{j_{Fin}\, p_{OFin}} \tag{2}$$

Dadurch kann der Sauerstoffabtrenngrad $f_{ORec}$ direkt zur Berechnung des erforderlichen flächenbezogenen Luftdurchsatzes $j_{Fin}$ verwendet werden. Er wirkt sich entsprechend der Beeinflussung des wirksamen Sauerstoffpartialdrucks im Feedgas auch auf die Sauerstoffpermeation aus.

Die Erfindung soll nachstehend anhand von Ausführungsbeispielen näher erläutert werden. In den dazugehörigen Zeichnungen zeigt

Fig. 1    den Sauerstoffdurchsatz im Vakuum- und Überdruckbetrieb (BSCF, 850 °C) für unterschiedliche Sauerstoffabtrenngrade ($O_2$ recovery),

Fig. 2    den Gleichgewichts-Sauerstoff-Partialdruck und Energiebedarf für Lufterhitzung (bei 85 % Wärmerückgewinnung), Sauerstoffkompression, Sauerstoffkühlung,

Fig. 3    den Gleichgewichts-Sauerstoff-Druck bzw. Vakuumdruck und den gesamten Energiebedarf $W_{ges.}$ für Sauerstoffkompression, Sauerstoffkühlung und Lufterhitzung bei unterschiedlichen Wärmerückgewinnungsgraden (WRG),

Fig. 4    eine schematische Darstellung eines MIEC-Membranmoduls zur Sauerstoffproduktion im Vakuumbetrieb mit stationären regenerativen Wärmetauschern und

Fig. 5    eine schematische Darstellung eines MIEC-Membranmoduls zur Sauerstoffproduktion im Vakuumbetrieb mit rotierend durchströmten regenerativen Wärmetauschern und Drehschieber.

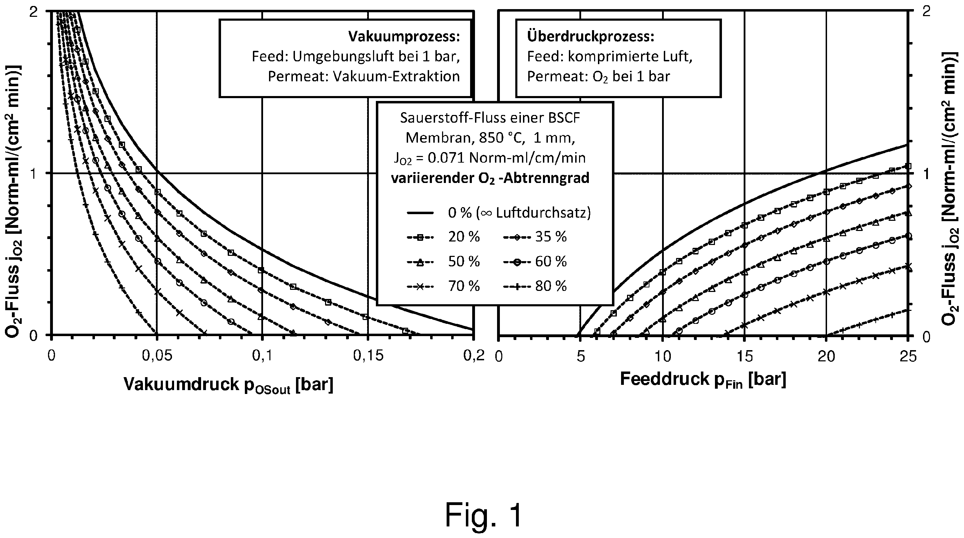

Fig. 1 zeigt die entsprechend einer vereinfachten Wagner'schen Gleichung berechnete Sauerstoffpermeation für den Vakuum- und Überdruckbetrieb für BSCF-Rohrmembranen und unterschiedliche Sauerstoffabtrenngrade. Es ist klar ersichtlich, dass steigende Sauerstoffabtrenngrade zu einer starken Verminderung der Sauerstoffpermeation führen. Außerdem wird deutlich, dass erst unterhalb eines bestimmten Vakuumdrucks auf der Permeatseite bzw. oberhalb eines bestimmten Überdrucks auf der Feedseite eine Sauerstoffpermeation eintritt und dieser limitierende Gleichgewichts-Sauerstoff-Partialdruck $p_{OEq}$ vom Sauerstoffabtrenngrad bestimmt wird.

Aus Fig. 1 wird klar, dass der Vakuumprozess mit sinkendem Vakuumdruck zu einer immer stärkeren Zunahme der Sauerstoffpermeation führt. Beim Überdruckprozess flacht die weitere Steigerung der Sauerstoffpermeation hingegen immer mehr ab. Außerdem ist beim Überdruckprozess eine Rückgewinnung der Kompressionsenergie erforderlich, die für kleinere Anlagen einen unverhältnismäßig hohen Aufwand bedeuten würde. Entsprechende Kompressoren und Entspannungsturbinen mit ausreichend hohem Wirkungsgrad stehen bislang nicht zur Verfügung. Für den Aufbau einer energieeffizienten MIEC-Membrananlage zur Sauerstofferzeugung wird deshalb im Gegensatz zu der Mehrzahl aktueller Publikationen auf einen Vakuumprozess orientiert.

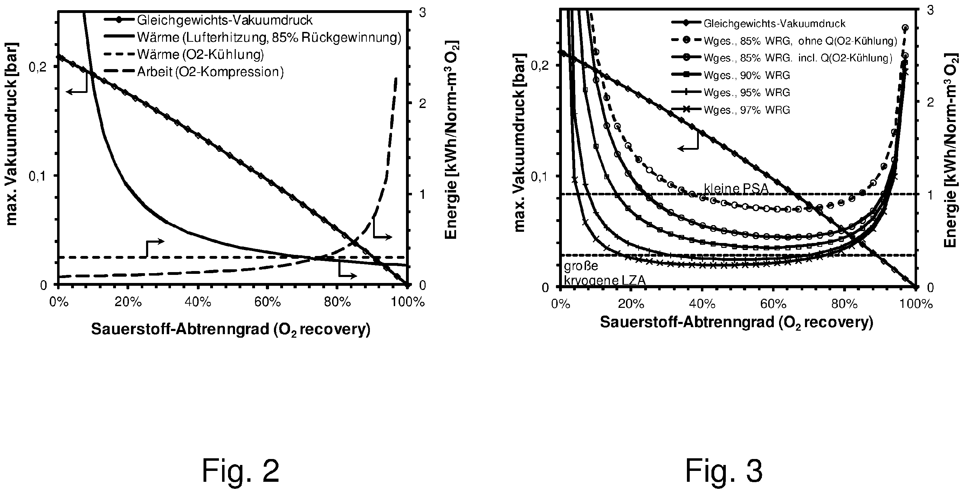

Modellierungen des Gesamtprozesses zeigen, dass der gesamte Energiebedarf des Prozesses entscheidend vom Sauerstoffabtrenngrad abhängt und alle energierelevanten Kenngrößen des Prozesses direkt aus dem Sauerstoffabtrenngrad berechnet werden können. Dementsprechend ist in Fig. 2 der Verlauf des Gleichgewichts-Sauerstoff-Partialdrucks $p_{OEq}$ sowie der Energiebedarf zur Lufterhitzung inkl. 85 % Wärmerückgewinnung, zur Kühlung des Sauerstoffs und zur Kompression des Sauerstoffs auf Umgebungsdruck dargestellt. Für die Berechnung der Kompressionsenergie im Vakuumbetrieb wurde die Kompressionsenergie konventioneller Vakuumpumpen zugrunde gelegt, die aus Saugleistung und Nennleistung resultiert. Die energieeffizientesten kommerziellen Vakuumpumpen erreichen minimale Werte von 0,015 $kWh_{el}./Sm^3$ ($Sm^3$ - Saug-$m^3$). Für die Rechnung wurde ein Wert von 0,018 $kWh_{el}./Sm^3$ verwendet.

Alle Energieangaben in Fig. 2 sind auf die erzeugte Sauerstoffmenge normiert. Sie können deshalb in einfacher Weise zur Berechnung des Gesamtenergiebedarfs $W_{ges.}$ verwendet werden. Den Gesamtenergiebedarf $W_{ges.}$ des Vakuumprozesses zeigt Fig. 3 für unterschiedliche Wärmerückgewinnungsgrade der eingesetzten Wärmetauscher, die die Abwärme der sauerstoffabgereicherten Abluft zur Erwärmung der Frischluft einsetzen. Bei 85 % WRG (Wärmerückgewinnungsgrad) des Wärmetauschers und 0,018 $kWh/Sm^3$ liegt der Gesamtenergieverbrauch auch ohne Nutzung der Abwärme aus der Sauerstoffkühlung bereits knapp unter der einer dezentralen PSA-Anlage.

Wird auch die Abwärme der Sauerstoffkühlung zur Luftvorwärmung genutzt, so kann im Bereich optimaler Sauerstoffabtrenngrade bereits ein deutlich niedrigerer spezifischer Energieverbrauch von 0,55 $kWh/Nm^3$ $O_2$ erreicht werden. Ein höherer Wärmerückgewinnungsgrad der Luft-Abluft-Wärmetauscher führt offensichtlich zu einer deutlichen Absenkung des spezifischen Energieverbrauchs des Verfahrens. Mit höheren WRG-Werten verbreitert sich außerdem der Bereich des minimalen spezifischen Energieverbrauchs, das Minimum ist weniger scharf ausgeprägt und zu geringeren Sauerstoffabtrenngraden verschoben. Dadurch wird es im Vergleich zu geringeren WRG-Werten der Wärmetauscher möglich, bei deutlich höherem Vakuumdruck noch Sauerstoff energieeffizient abzutrennen. Während z. B. der maximal zulässige Vakuumdruck im Minimum der Energiebedarfskurve für 85 % WRG ca. 90 mbar beträgt, steigt dieser bei 97 % WRG auf 133 mbar. Es ist dadurch möglich, bei höherer Wärmerückgewinnung kleinere Vakuumpumpen einzusetzen und den Energieanteil der Kompression am gesamten spezifischen Energiebedarf weiter zu senken.

Bereits bei 97 % WRG kann der spezifische Energiebedarf des MIEC-Membranverfahrens einen Wert von 0,3 $kWh/Nm^3$ $O_2$ unterschreiten, wenn Sauerstoffabtrenngrade von 20 % bis ca. 70 % und daraus resultierende Verhältnisse von Frischluftmenge zu produzierter Sauerstoffmenge von 24 : 1 bis 6,8 : 1 eingehalten werden. Damit wird erfindungsgemäß gegenüber dem Stand der Technik (kryogenen Luftzerlegungsanlagen, dezentralen PSA-Anlagen) ein erheblicher energetischer Vorteil erreicht.

Alternativ zur Steuerung der Luftmenge proportional zum produzierten Sauerstoff wird der Sauerstoffpartialdruck am Feedausgang $p_{OFout}$ für die Realisierung einer energieeffizienten Betriebsweise eingesetzt. Dazu werden der Sauerstoffpartialdruck am Feedausgang $p_{OFout}$ und der Vakuumdruck bzw. der damit identische Sauerstoffpartialdruck auf der Permeatseite $p_{OSout}$ laufend gemessen. Der Luftdurchsatz wird regelungstechnisch so angepasst, dass der Sauerstoffpartialdruck am Feedausgang $p_{OFout}$ nicht mehr als 100 mbar über dem Vakuumdruck $p_{OSout}$ liegt, in einer bevorzugten Ausführungsvariante jedoch nicht mehr als 20 mbar über diesem liegt. Damit werden in einem weiten Betriebsbereich ein ausreichend niedriger Luftdurchsatz und ein entsprechend hoher Sauerstoffabtrenngrad realisiert, um einen energieeffizienten Betrieb zu gewährleisten.

Eine energetisch hocheffiziente MIEC-Membrananlage ist erfindungsgemäß durch Erwärmung der Frischluft über regenerative Wärmetauscher gekennzeichnet, die mehr als 85 %, in einer bevorzugten Ausführungsvariante etwa 95 % der in der Abluft enthaltenen Wärmeenergie sowie die bei der Kühlung des Sauerstoffs frei werdende Abwärme zur Lufterwärmung nutzen. Die Triebkraft für den Sauerstofftransport wird durch Anlegen eines Vakuums erzeugt, da dadurch die aufzuwendende Kompressionsenergie minimiert wird und deren Rückgewinnung entfällt. Erfindungsgemäß wird die Membrananlage so betrieben, dass im Normalbetrieb ein Verhältnis der eintretenden Frischluftmenge zur produzierten Sauerstoffmenge von 25 : 1 nicht überschritten und ein Verhältnis von 6 : 1 nicht unterschritten wird. Die erforderliche Restwärme zur Aufrechterhaltung der Betriebstemperatur der Membrananlage wird durch elektrische Zusatzheizung oder durch Eindosieren geringer Brennstoffmengen erreicht. Dadurch kann im letzteren Fall eine weitere Verringerung des Verbrauchs an Elektroenergie erreicht werden.

Ausführungsbeispiel 1:

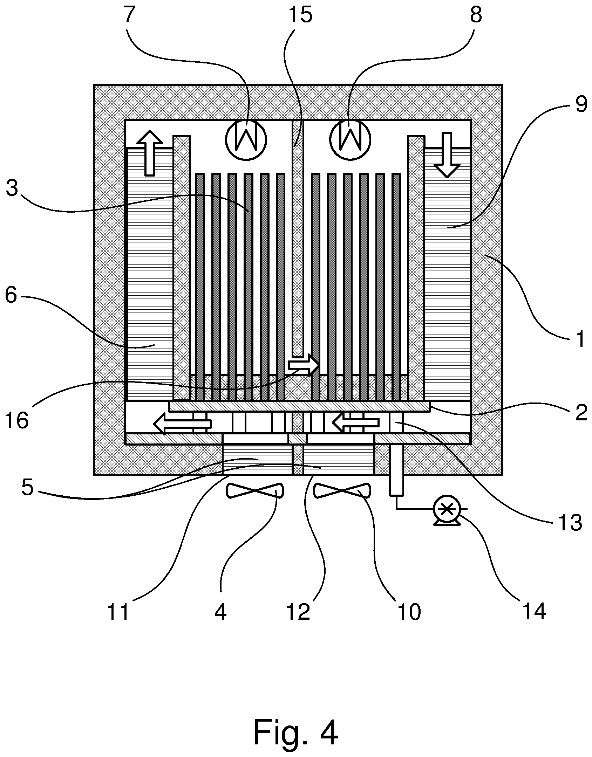

Die in Fig. 4 schematisch dargestellte Membrananlage zur energieeffizienten Sauerstoffproduktion besteht erfindungsgemäß aus einem nicht druckdichten Gehäuse 1 mit einer metallischen Anschlussplatte 2, in der einseitig geschlossene BSCF-Rohrmembranen 3 mittels Silikondichtungen eingesetzt wurden. Eine Trennwand 15 mit seiner Öffnung 16 trennt das Gehäuseinnere in zwei Kammern, die bezogen auf den Frischluftweg spiegelsymmetrisch aufgebaut sind. In der Zyklusphase A wird die Frischluft über einen drehzahlgeregelten dem Eingang 11 vorgeordneten Lüfter 4 angesaugt, durch einen regenerativen Wärmetauscher 5 vorgewärmt und durch die geteilte Anschlussplatte 2 geleitet, um die Wärme des abgesaugten Sauerstoffs aufzunehmen. Anschließend wird die Frischluft zur weiteren Erwärmung durch einen stationären Regenerator 6 geleitet und mit der Zusatzheizung 7 auf Betriebstemperatur nacherhitzt. Der Luftstrom passiert die BSCF-Rohrmembranen 3 und die zweite Zusatzheizung 8 und gibt seine Wärme an den weiteren stationären Regenerator 9 ab. Der bereits stark abgekühlte, sauerstoffabgereicherte Luftstrom wird anschließend durch die metallische Anschlussplatte 2 zum regenerativen Wärmetauscher 5 auf diejenigen Bereiche geleitet, die dem Ausgang 12 vorgelagert sind, wo ihm weitere Wärme entzogen wird. Der drehzahlgeregelte, dem Ausgang 12 nachgeordnete Lüfter 10 arbeitet in Zyklusphase A im Saugbetrieb. Die metallische Anschlussplatte 2 enthält eine vakuumdichte Hohlraumstruktur 13, die mit den BSCF-Rohrmembranen 3 in Verbindung steht. Der Hohlraum dieser Hohlraumstruktur 13 wird durch eine externe Vakuumpumpe 14 abgesaugt. Der reine Sauerstoff steht anschließend bei Umgebungsdruck zur Verfügung.

Nach einer entsprechenden Zykluszeit wird die Strömungsrichtung des Luftstroms umgekehrt, entweder durch nichtdargestellte entsprechende Luftklappen oder durch Umkehr der Laufrichtung der Lüfter 4 und 10. In dieser Zyklusphase B kehren sich dementsprechend alle Gasströmungen um. Auf diese Weise wird sowohl die in der heißen Abluft enthaltene Wärme als auch die durch den Sauerstoff auf die metallische Anschlussplatte 2 übertragene Wärme weitgehend zurückgewonnen. Der Luftdurchsatz wird durch die drehzahlgeregelten Lüfter 4 und 10 so geregelt, dass der Sauerstoffpartialdruck nach dem Membrankontakt nur maximal 100 mbar, erfindungsgemäß bevorzugt nur ca. 20 mbar über dem Sauerstoffpartialdruck auf der Permeatseite liegt. Bei Einhaltung dieser Vorgaben wird dadurch ein geringer Luftüberschuss bzw. ein mittlerer Sauerstoffabtrenngrad von 30 bis 70 % und damit ein energieeffizienter Betrieb sichergestellt.

Ausführungsbeispiel 2:

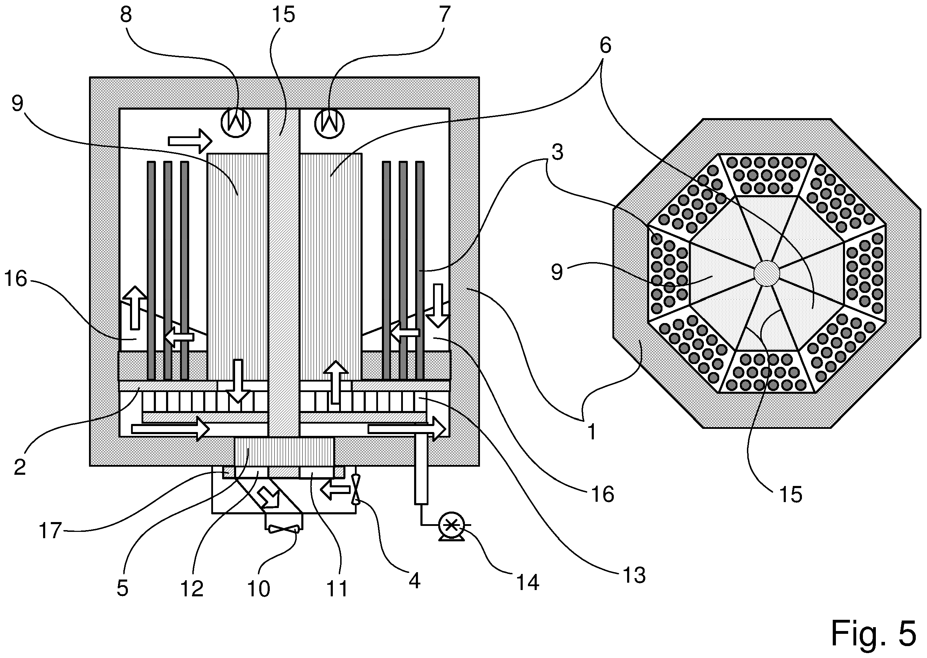

Die in Fig. 5 schematisch dargestellte Membrananlage zur Sauerstoffproduktion besteht erfindungsgemäß aus einem nicht druckdichten Gehäuse 1 mit einer metallischen Anschlussplatte 2, in der einseitig geschlossene BSCF-Rohrmembranen 3 mittels Kabelverschraubungen eingesetzt wurden. Das Gehäuse 1 ist achteckig aufgebaut und durch acht Trennwände 15 in acht Kammern unterteilt, wobei jede Trennwand im Bereich der Anschlussplatte 2 mit einer Öffnung 16 versehen ist, sodass die Frischluft durch alle Kammern strömen kann. Die Frischluft wird über den drehzahlgeregelten, dem Eingang 11 vorgeordneten Lüfter 4 angesaugt. Der Eingang 11 liegt auf einem Drehschieber 17 und ist dabei so groß gestaltet, dass die Frischluft in drei Kammern gleichzeitig einströmen kann. Der Ausgang 12 liegt ebenfalls auf dem Drehschieber 17 und ist vorzugsweise gleich dimensioniert wie der Eingang 11 und liegt dabei dem Eingang 11 gegenüber. Der dem Eingang 11 unmittelbar nachgeordnete regenerative Wärmetauscher 5 ist dabei mindestens so dimensioniert, dass bei Drehung des Drehschiebers um 360° ständig Bereiche vom Eingang 11 bzw. vom Ausgang 12 überdeckt werden. Die durch den vorgeordneten Lüfter 4 durch den Eingang 11 angesaugte Frischluft wird durch Bereiche des regenerativen Wärmetauschers 5 zunächst erwärmt. Weitere Erwärmung erfolgt durch das Vorbeistreichen an der segmentierten Anschlussplatte 2 und den nachfolgenden stationären Regeneratoren 6 der drei Kammern, die dem Eingang nachgeordnet sind. Die im Deckenbereich angeordneten Zusatzheizungen 7 werden zur Nacherhitzung des Luftstroms eingesetzt. Alternativ zu einer elektrischen Heizung kann hier auch mit geringen Mengen Brenngas geheizt werden. Die erhitzte Frischluft strömt anschließend zwischen den Trennwänden 15 abwärts und durch die Öffnungen 16 in die gegenüberliegenden Kammern. Dort aufwärts an den BSCF-Rohrmembranen 3 und an den Zusatzheizungen 8 vorbei wird die bereits abgereicherte Frischluft nun über die stationären Regeneratoren 9 der jeweiligen Kammern vorbeigeleitet. Abschließend wird die weitgehend abgekühlte Frischluft durch die geteilte Anschlussplatte 2 geleitet und durchströmt diejenigen Bereiche des regenerativen Wärmetauschers 5, die vom Ausgang 12 geöffnet sind. Dabei wird dem Abluftstrom weitere Wärme entzogen. Der drehzahlgeregelte nachgeordnete Lüfter 10 arbeitet stets im Saugbetrieb. Die metallische Anschlussplatte 2 enthält eine vakuumdichte Hohlraumstruktur 13, in der sich der gewonnene Sauerstoff sammelt und somit durch eine externe Vakuumpumpe 14 abgesaugt wird. Durch die ständige Drehung des Drehschiebers 17 erfolgt eine permanente Umkehrung der Frischluftzufuhrrichtung in Bezug auf die gegenüberliegenden Kammern, d. h. der Eingang 11 liegt nach 180° Drehung des Drehschiebers 17 am Ausgang 12 und umgekehrt.

Durch den gezeigten Aufbau wird sowohl die in der heißen Abluft enthaltene Wärme als auch die durch den Sauerstoff auf die metallische Anschlussplatte 2 übertragene Wärme weitgehend zurückgewonnen. Der Luftdurchsatz wird durch den vor dem Drehschieber 17 vorgeordneten Lüfter 4 und den nachgeordneten Lüfter 10 mit variabler Drehzahl so geregelt, dass der Luftdurchsatz das 12fache bis 18fache der Sauerstoffproduktionsrate beträgt.

Bezugszeichenliste

1 Gehäuse
2 Anschlussplatte
3 BSCF-Rohrmembranen
4 vorgeordneter Lüfter
5 regenerativer Wärmetauscher
6 Regenerator
7 Zusatzheizung
8 Zusatzheizung
9 Regenerator
10 nachgeordneter Lüfter
11 Eingang
12 Ausgang
13 Hohlraumstruktur
14 Vakuumpumpe
15 Trennwand
16 Öffnung
17 Drehschieber

**Patentansprüche**

1. Membrantrennverfahren zur energieeffizienten Gewinnung von Sauerstoff aus erwärmter Frischluft unter Verwendung gemischt leitender Membranen im Vakuumbetrieb, wobei die Frischluft nach Trennung des Sauerstoffs als Abluft abgeführt wird, **dadurch gekennzeichnet, dass**

   - mindestens 85% der zur Erwärmung der Frischluft erforderlichen Wärmeenergie durch Nutzung der Abwärme der Abluft und / oder des gewonnenen Sauerstoffs erfolgt,
   - die restliche Erwärmung der Frischluft durch externe Energiezufuhr realisiert wird und
   - für die Realisierung einer energieeffizienten Betriebsweise der Luftdurchsatz so geregelt wird, dass der Sauerstoffpartialdruck in der Abluft nicht mehr als 100 mbar über dem Vakuumdruck auf der Permeatseite liegt und das Verhältnis der Volumenströme von Frischluftmenge zu produzierter Sauerstoffmenge innerhalb der Grenzen 6 : 1 und 25 : 1 eingestellt wird.

2. Membrantrennverfahren nach Anspruch 1 **dadurch gekennzeichnet, dass** die restliche Erwärmung durch elektrische Beheizung oder Verbrennungsprozesse erfolgt.

3. Membrantrennverfahren nach Anspruch 1 **dadurch gekennzeichnet, dass** unter Verwendung regenerativer Wärmetauscher die erforderliche Wärmeenergie zur Erwärmung der Frischluft gewonnen wird.

4. Membrantrennverfahren nach Anspruch 1 **dadurch gekennzeichnet, dass**

   - der Sauerstoff auf der Permeatseite durch Vakuum abgesaugt wird,
   - das Feedgas bei Umgebungsdruck eingesetzt wird und
   - die Vakuumerzeugung durch elektromechanische Vakuumpumpen, mechanische Vakuumpumpen oder Dampfstrahlpumpen erfolgt.

5. Membrantrennverfahren nach Anspruch 1 bis 2 **dadurch gekennzeichnet, dass** der Luftdurchsatz so geregelt wird, dass der Sauerstoffpartialdruck in der Abluft nicht weniger als 20 mbar über dem Vakuumdruck auf der Permeatseite liegt.

6. Membrananlage zur energieeffizienten Gewinnung von Sauerstoff aus Frischluft enthaltend ein Gehäuse (1) mit einem Eingang (11) und einem Ausgang (12), MIEC (Mixed Ionic Electronic Conductor)-Membranen und eine Vakuumpumpe (14), **dadurch gekennzeichnet, dass**

   - eine metallische Anschlussplatte (2) im Gehäuse (1) angeordnet ist, die eine vakuumdichte Hohlraumstruktur (13) enthält, in die die einseitig geschlossenen MIEC-Membranen gasdicht eingesetzt angeordnet sind,
   - mindestens eine Trennwand (15) zur Aufteilung in Kammern vorhanden ist, wobei jede Kammer einen stationären Regenerator (6 oder 9), eine Zusatzheizung (7 oder 8) und einen Teil der MIEC-Membranen aufweist und in jeder Trennwand (15) eine Öffnung (16) vorhanden ist, sodass ein Durchgang für die Frischluft von der dem Eingang (11) nachgeordneten Kammer zu der dem Ausgang (12) vorgeordneten Kammer gewährleistet ist,
   - dem Eingang (11) ein vorgeordneter Lüfter (4) vorgeordnet ist,
   - dem Ausgang (12) ein nachgeordneter Lüfter (10) nachgeordnet ist, wobei vorgeordneter Lüfter (4) und nachgeordneter Lüfter (10) entgegengesetzte Saugrichtungen aufweisen,
   - ein regenerativer Wärmetauscher (5) vorhanden ist, wobei Teilbereiche dem Eingang (11) und andere Teilbereiche dem Ausgang (12) zugeordnet sind und
   - die Vakuumpumpe (14) mit der Hohlraumstruktur (13) zum Absaugen des gewonnenen Sauerstoffs in Verbindung stehend angeordnet ist.

7. Membrananlage nach Anspruch 6 **dadurch gekennzeichnet, dass** das Gehäuse (1) ein nicht druckdichtes Gehäuse (1) ist.

8. Membrananlage nach Anspruch 6 oder 7, **dadurch gekennzeichnet, dass** die entgegengesetzten Saugrichtungen umkehrbar einstellbar sind.

9. Membrananlage nach Anspruch 6 oder 7, **dadurch gekennzeichnet, dass** der vorgeordnete Lüfter (4) und der nachgeordnete Lüfter (10) auf einem Drehschieber (17) derart angeordnet sind, dass bei Drehung des Drehschiebers (17) der Eingang (11) von der dem Eingang (11) nachgeordneten Kammer zur jeweils benachbarten Kammer wandert und dementsprechend der Ausgang (12) von der gegenüberliegenden Kammer zur benachbarten Kammer wandert.

10. Membrananlage nach Anspruch 9, **dadurch gekennzeichnet, dass** der Eingang (11) und dementsprechend der Ausgang (12) sich jeweils über mehrere benachbarte Kammern erstrecken.

**Claims**

1. A membrane separation process for the energy-efficient recovery of oxygen from heated fresh air using mixed-conducting membranes in vacuum operation, the fresh air being discharged as exhaust air after separation of the oxygen, **characterised in that**

   - at least 85% of the thermal energy required to heat the fresh air is obtained by using the waste heat of the exhaust air and/or the oxygen recovered,
   - the remaining heating of the fresh air is achieved by external energy supply and
   - in order to achieve an energy-efficient mode of operation, the air flow rate is controlled in such a way that the oxygen partial pressure in the exhaust air is not more than 100 mbar above the vacuum pressure on the permeate side and the ratio of the volume flows of fresh air quantity to produced oxygen quantity is set to be within the limits 6 : 1 and 25 : 1.

2. The membrane separation process according to claim 1, **characterised in that** the remaining heating is achieved by electrical heating or combustion processes.

3. The membrane separation process according to claim 1, **characterised in that** the thermal energy required to heat the fresh air is obtained using regenerative heat exchangers.

4. The membrane separation process according to claim 1, **characterised in that**

   - the oxygen is sucked off on the permeate side by vacuum,
   - the feed gas is used at ambient pressure and
   - the vacuum is generated by electromechanical vacuum pumps, mechanical vacuum pumps or steam jet pumps.

5. The membrane separation process according to claims 1 to 2, **characterised in that** the air flow rate is controlled in such a way that the oxygen partial pressure in the exhaust air is not less than 20 mbar above the vacuum pressure on the permeate side.

6. A membrane system for the energy-efficient production of oxygen from fresh air, containing a housing (1) with an inlet (11) and an outlet (12), MIEC (Mixed Ionic Electronic Conductor) membranes and a vacuum pump (14), **characterised in that**

   - a metallic connecting plate (2) is arranged in the housing (1), said plate (2) containing a vacuum-tight cavity structure (13) into which the MIEC diaphragms, closed on one side, are inserted in a gas-tight manner,
   - at least one partition (15) is provided for division into chambers, each chamber comprising a stationary regenerator (6 or 9), a supplementary heater (7 or 8) and some of the MIEC membranes, and an opening (16) is provided in each partition (15) so that a passage for fresh air from the chamber downstream of the inlet (11) to the chamber upstream of the outlet (12) is ensured,
   - an upstream fan (4) is arranged upstream of the inlet (11),
   - a downstream fan (10) is arranged downstream of the outlet (12), said upstream fan (4) and downstream fan (10) having opposite suction directions,
   - a regenerative heat exchanger (5) is present, with some partial areas being assigned to the inlet (11) and other partial areas being assigned to the outlet (12), and
   - the vacuum pump (14) is arranged in communication with the cavity structure (13) for sucking the obtained oxygen.

7. The membrane system according to claim 6, **characterised in that** the housing (1) is a non-pressure-tight housing (1).

8. The membrane system according to claim 6 or 7, **characterised in that** the opposite suction directions are reversibly adjustable.

9. The membrane system according to claim 6 or 7, **characterised in that** the upstream fan (4) and the downstream fan (10) are arranged on a rotary slide valve (17) in such a way that when the rotary slide valve (17) rotates, the inlet (11) moves from the chamber downstream of the inlet (11) to the respective adjacent chamber and accordingly the outlet (12) moves from the opposite chamber to the adjacent chamber.

10. The membrane system according to claim 9, **characterised in that** the inlet (11) and correspondingly the outlet (12) each extend over several adjacent chambers.

**Revendications**

1. Procédé de séparation membranaire pour la récupération efficace en énergie d'oxygène à partir d'air frais chauffé en utilisant des membranes conductrices mixtes en fonctionnement sous vide, l'air frais étant évacué comme air d'échappement après séparation de l'oxygène, **caractérisé en ce que**

   - au moins 85 % de l'énergie thermique nécessaire pour chauffer l'air frais est obtenue en utilisant la chaleur résiduelle de l'air évacué et/ou l'oxygène obtenu,
   - le chauffage restant de l'air frais est réalisé par un apport énergétique externe et
   - pour la réalisation d'un mode de fonctionnement efficace en énergie, le débit d'air est contrôlé de manière à ce que la pression partielle d'oxygène dans l'air d'échappement ne soit pas supérieure de plus de 100 mbar à la pression de vide du côté du perméat et le rapport des flux volumétriques de la quantité d'air frais à la quantité d'oxygène produite est fixé dans les limites 6 : 1 et 25 : 1.

2. Procédé de séparation membranaire selon la revendication 1, **caractérisé en ce que** le chauffage résiduel est effectué par chauffage électrique ou par des procédés de combustion.

3. Procédé de séparation membranaire selon la revendication 1, **caractérisé en ce que** l'énergie thermique nécessaire pour chauffer l'air frais est obtenue en utilisant des échangeurs de chaleur régénératifs.

4. Procédé de séparation membranaire selon la revendication 1, **caractérisé en ce que**

   - l'oxygène du côté du perméat est aspiré par le vide,
   - le gaz d'alimentation est utilisé à la pression ambiante et
   - le vide est généré par des pompes à vide électromécaniques, des pompes à vide mécaniques ou des pompes à jet de vapeur.

5. Procédé de séparation membranaire selon la revendication 1 à 2, **caractérisé en ce que** le débit d'air est contrôlé de manière à ce que la pression partielle d'oxygène dans l'air évacué ne soit pas supérieure de moins de 20 mbar à la pression de vide du côté du perméat.

6. Installation à membranes pour la production efficace en énergie d'oxygène à partir d'air frais, comprenant un boîtier (1) avec une entrée (11) et une sortie (12), des membranes MIEC (Mixed Ionic Electronic Conductor) et une pompe à vide (14), **caractérisée en ce que**

   - une plaque de raccordement métallique (2) est disposée dans le boîtier (1), ladite plaque (2) comportant une structure creuse (13) étanche au vide dans laquelle les membranes MIEC, fermées d'un côté, sont insérées de manière étanche au gaz,
   - au moins une cloison (15) est prévue pour la division en chambres, dans laquelle chaque chambre possède un régénérateur fixe (6 ou 9), un chauffage supplémentaire (7 ou 8) et une partie des membranes MIEC, et une ouverture (16) est prévue dans chaque cloison (15) de sorte qu'un passage pour l'air frais de la chambre en aval de l'entrée (11) vers la chambre en amont de la sortie (12) est assuré,
   - l'entrée (11) est précédée d'un ventilateur en amont (4),
   - un ventilateur aval (10) est disposé en aval de la sortie (12), dans lequel le ventilateur amont (4) et le ventilateur aval (10) ont des directions d'aspiration opposées,
   - un échangeur thermique régénératif (5) est présent, dont des zones partielles sont affectées à l'entrée (11) et d'autres zones partielles sont affectées à la sortie (12) et
   - la pompe à vide (14) est disposée en communication avec la structure creuse (13) pour aspirer l'oxygène récupéré.

7. Système à membrane selon la revendication 6, **caractérisé en ce que** le boîtier (1) est un boîtier non étanche à la pression (1).

8. Système à membrane selon la revendication 6 ou 7, **caractérisé en ce que** les directions d'aspiration opposées sont réglables de manière réversible.

9. Installation à membrane selon la revendication 6 ou 7, **caractérisée en ce que** le ventilateur amont (4) et le ventilateur aval (10) sont disposés sur un chariot rotatif (17) de telle manière que, lorsque le chariot rotatif (17) tourne, l'entrée (11) se déplace de la chambre en aval de l'entrée (11) vers la chambre adjacente respective et, de façon correspondante, la sortie (12) se déplace de la chambre opposée vers la chambre adjacente.

10. Installation à membrane selon la revendication 9, **caractérisée en ce que** l'entrée (11) et, de manière correspondante, la sortie (12) s'étendent chacune sur plusieurs chambres adjacentes.

O$_2$-Fluss j$_{O2}$ [Norm-ml/(cm² min)]

**Überdruckprozess:**
Feed: komprimierte Luft,
Permeat: O$_2$ bei 1 bar

**Vakuumprozess:**
Feed: Umgebungsluft bei 1 bar,
Permeat: Vakuum-Extraktion

Sauerstoff-Fluss einer BSCF
Membran, 850 °C, 1 mm,
J$_{O2}$ = 0.071 Norm-ml/cm/min
**variierender O$_2$ -Abtrenngrad**

— 0 % (∞ Luftdurchsatz)
-□- 20 %    -◇- 35 %
-◁- 50 %    -○- 60 %
-×- 70 %    -+- 80 %

Feeddruck p$_{Fin}$ [bar]

Vakuumdruck p$_{OSout}$ [bar]

O$_2$-Fluss j$_{O2}$ [Norm-ml/(cm² min)]

# Fig. 1

Fig. 2

Fig. 3

EP 3 022 152 B1

Fig. 4

Fig. 5

EP 3 022 152 B1

EP 3 022 152 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008014481 A1
- EP 2067937 A2
- WO 2009065374 A3
- EP 2026004 A1

**In der Beschreibung aufgeführte Nicht-Patentliteratur**

- **FU, C. ; GUNDERSEN, T.** Using exergy analysis to reduce power consumption in air separation units for oxy-combustion processes. *Energy,* 2012, vol. 44 (1), 60-68
- **DIETRICH, W. ; SCHOLZ, G. ; VOIT, J.** Linde-Verfahren zur Gewinnung von Sauerstoff und Ozon für eine Zellstoff- und Papierfabrik. *Berichte aus Technik und Wissenschaft,* 2000, vol. 80, 3-8
- **SUNARSO, J. ; BAUMANN, S. ; SERRA, J. M. ; MEULENBERG, W. A. ; LIU, S. ; LIN, Y. S. ; DINIZ DA COSTA, J. C.** Mixed ionic-electronic conducting (MIEC) ceramicbased membranes for oxygen separation. *Journal of Membrane Science,* 2008, vol. 320, 13-41
- **ARMSTRONG, P. A. ; BENNETT, D. L. ; FOSTER, E. P. ; STEIN, V. E.** ITM Oxygen: The New Oxygen Supply for the New IGCC Market. *Gasification Technologies 2005,* 09. Oktober 2005
- Einsatz keramischer BSCF-Membranen in einem transportablen Sauerstoff-Erzeuger. **KRIEGEL, R.** DKG Handbuch Technische Keramische Werkstoffe. HvB-Verlag Ellerau, November 2010, vol. 119, 1-46
- **STADLER, H. ; BEGGEL, F. ; HABERMEHL, M. ; PERSIGEHL, B. ; KNEER, R. ; MODIGELL, M. ; JESCHKE, P.** Oxyfuel coal combustion by efficient integration of oxygen transport membranes. *International Journal of Greenhouse Gas Control,* 2011, vol. 5, 7-15
- Oxygen Supply for Oxyfuel Power Plants by Oxy-Vac-Jül Process. **NAZARKO, J. ; WEBER, M. ; RIENSCHE, E. ; STOLTEN, D.** Efficient Carbon Capture for Coal Power Plants. 2nd International Conference on Energy Process Engineering, 20. Juni 2011
- **PFAFF, I. ; KATHER, A.** Comparative Thermodynamic Analysis and Integration Issues of CCS Steam Power Plants Based on Oxy-Combustion with Cryogenic or Membrane Based Air Separation. *Energy Procedia,* 2009, vol. 1 (1), 495-502
- **VENTE, JAAP F. ; HAIJE, WIM. G. ; IJPELAAN, RUUD, RUSTING, FRANS T.** On the full-scale module design of an air separation unit using mixed ionic electronic conducting membranes. *Journal of Membrane Science,* 2006, vol. 278, 66-71
- **BAUMANN, S. ; SERRA, J.M. ; LOBERA, M.P. ; ESCOLÁSTICO, S. ; SCHULZE-KÜPPERS, F. ; MEULENBERG, W.A.** Ultrahigh oxygen permeation flux through supported Ba0.5Sr0.5Co0.8Fe0.2O3-$\delta$ membranes. *Journal of Membrane Science,* 2011, vol. 377, 198-205